# EUROPEAN PATENT SPECIFICATION

(11) **EP 4 119 271 B1**
(45) Date of publication and mention of the grant of the patent: **18.11.2026**
(21) Application number: 22183708.1
(22) Date of filing: 08.07.2022
(51) Int. Cl.: B23C 5/10, B23C 5/20

(54) **CUTTING INSERT, INDEXABLE ROTARY CUTTING TOOL, AND BODY OF THE SAME**
SCHNEIDEINSATZ, DREHENDES WENDESCHNEIDWERKZEUG UND KÖRPER DAFÜR
INSERT DE COUPE ET OUTIL DE COUPE ROTATIF INDEXABLE ET CORPS CORRESPONDANT

(30) Priority: 15.07.2021 JP 2021117280
(43) Date of publication of application: 18.01.2023
(73) Proprietor: Tungaloy Corporation, Iwaki-shi Fukushima 970-1144 (JP)
(72) Inventor: HORI, Issei, Iwaki-shi, Fukushima, 970-1144 (JP); SAJI, Ryuichi, Iwaki-shi, Fukushima, 970-1144 (JP)
(74) Representative: Vossius & Partner Patentanwälte Rechtsanwälte mbB

(56) References cited:
- EP-A1- 3 907 030
- EP-A2- 1 782 902
- WO-A1-2021/039913
- DE-T5- 112015 002 701
- JP-A- 2006 326 755

## Description

### Background

### Field

The present invention relates to a cutting insert, an indexable rotary cutting tool, and the body of the same.

### Description of Related Art

When five-axis machining is to be performed on a cutting-target material or the like such as a part, a die, or the like with a complicated shape, a cutting insert with a curved cutting edge and an indexable rotary cutting tool to/from which the cutting insert can be attached/detached may be used in order to realize high-efficiency machining and ensure a good machined surface in the finishing process. Such a cutting insert used in the finishing process or the like requires high accuracy regarding cutting edge contour and so on (for example, see Patent Publication JP2017-189855A).

DE 11 2015 002701 T5 relates to a milling insert and a milling tool comprising the same.

### Summary

The invention is defined by the independent claim 1. Further embodiments of the invention are defined by the dependent claims. However, conventional cutting inserts such as that described above may have a positive shape in order to ensure sharpness, which may lead to poor accuracy in attaching such an insert to the body of a cutting tool. Also, if the number of corners in one cutting insert is increased (for example, a specification with two corners on one side is employed) while the size of the screw to be used when attaching the cutting insert to the body of the cutting tool is kept the same, then the insert width is large, and there is a problem in that it is difficult to increase the number of blades while the cutting insert is mounted on the body.

Therefore, the present invention aims to provide a cutting insert with a structure that can improve accuracy in attaching the cutting insert to the body of a cutting tool, and increase the number of blades while the cutting insert is mounted on the body, and an indexable rotary cutting tool and the body of the same.

The present invention is a cutting insert including:
an upper surface that has a shape with a lengthwise direction and a widthwise direction;
a lower surface that is located opposite to the upper surface and has a shape with a lengthwise direction and a widthwise direction;
a peripheral side surface that is formed so as to connect the upper surface and the lower surface;
cutting edges that are respectively formed on an intersecting ridge line of the upper surface and the peripheral side surface, and on an intersecting ridge line of the lower surface and the peripheral side surface, and each have a curved ridge line that extends in a lengthwise direction thereof; and
a through hole that penetrates from the upper surface to the lower surface,
wherein end surfaces located in the lengthwise direction of the upper surface and the lower surface, of the peripheral surface, are respectively inclined with respect to the upper surface and the lower surface, and are parallel to each other, and
a reference surface that is located opposite to the cutting edges, of the peripheral surface, is a flat surface that is orthogonal to the upper surface and the lower surface.

According to the above-described aspect, the reference surface that is located opposite to the cutting edges, of the peripheral surface, is a flat surface that is orthogonal to the upper surface and the lower surface. Therefore, it is possible to more stably attach the insert compared to inserts with the conventional shape. Also, it is possible to increase the rigidity of the insert clamp during cutting compared to the conventional insert shape by forming the end faces located in the lengthwise direction of the upper surface and the lower surface so as to be parallel to each other and so as to be inclined with respect to the upper surface and the lower surface. In addition, by employing the specification in which cutting edges are respectively provided on two surfaces (the upper surface and the lower surface), it is possible to increase the number of corners in one cutting insert without increasing the insert width, and therefore it is possible to increase the number of blades in the state where the cutting insert is mounted on the body.

In the cutting insert according to the above-described aspect, the curved cutting edges, and intersection regions that are respectively located in the lengthwise direction of the upper surface and the lower surface, may be connected to each other via curved portions when viewed in a direction that is orthogonal to the upper surface and a direction that is orthogonal to the lower surface, respectively.

In the cutting insert according to the above-described aspect, each of the curved portions may have an arc shape.

In the cutting insert according to the above-described aspect, a radius of curvature of the curved portions may be smaller than a radius of curvature of the cutting edges.

In the cutting insert according to the above-described aspect, the upper surface and the lower surface may have an axially symmetric shape centered around a central axis of symmetry that is orthogonal to the reference surface, and offset from each other in the lengthwise direction at the same angle as an inclination angle of the end surfaces.

In the cutting insert according to the invention, flanks of the cutting edges have a shape in which a clearance angle thereof gradually changes from a positive angle to a negative angle in the lengthwise direction.

In the cutting insert according to the above-described aspect, the upper surface may be formed so as to have a shape in which a height of the upper surface in an axial direction that is orthogonal to the lengthwise direction and the widthwise direction decreases in a direction toward the cutting edge, and thereafter gradually increases in the direction toward the cutting edge.

In the cutting insert according to the above-described aspect, a height of the cutting edge in the axial direction may be larger than a height of a flat portion around the through hole, of the upper surface.

Another aspect of the present invention is a body of a cutting tool to which the cutting insert described above can be detachably attached, the body including:
a seating surface on which a flat portion around the through hole of the upper surface or the lower surface of the cutting insert is to be seated as an attachment surface; and
a binding surface that is orthogonal to the seating surface and is to abut against the reference surface of the cutting insert.

Another aspect of the present invention is an indexable rotary cutting tool including the above-described body.

### Brief Description of Drawings

FIG. 1A is a diagram showing an example of an indexable rotary cutting tool to which a cutting insert is detachably attached;
FIG. 1B is an enlarged diagram of a portion of the indexable rotary cutting tool shown in FIG. 1A;
FIG. 2A is a perspective view from the blade tip side, showing an example of an indexable rotary cutting tool to which the cutting insert is detachably attached;
FIG. 2B is an enlarged diagram of a portion of the indexable rotary cutting tool shown in FIG. 2A;
FIG. 3A is a side view showing an example of an indexable rotary cutting tool to which the cutting insert is detachably attached;
FIG. 3B is a vertical cross-sectional view showing a portion of the indexable rotary cutting tool shown in FIG. 3A;
FIG. 4 is a view from the leading end (a bottom view), showing an example of an indexable rotary cutting tool to which the cutting insert is detachably attached;
FIG. 5 is a perspective view showing an example of a cutting insert;
FIG. 6 is a view (a plan view) of the cutting insert viewed from an upper surface thereof;
FIG. 7 is diagram showing a peripheral side surface on which a cutting edge of the cutting insert is provided, viewed in a widthwise direction of the upper surface (or the lower surface);
FIG. 8 is diagram showing a surface that is referred to as an end surface of the peripheral side surface on which the cutting edge of the cutting insert is provided, viewed in a lengthwise direction of the upper surface (or the lower surface);
FIG. 9A is a cross-sectional view of the cutting insert taken along the IXA-IXA line in FIG. 6;
FIG. 9B is a cross-sectional view of the cutting insert taken along the IXB-IXB line in FIG. 6;
FIG. 9C is a cross-sectional view of the cutting insert taken along the IXC-IXC line in FIG. 6;
FIG. 10A is a cross-sectional view of the cutting insert taken along the XA-XA line in FIG. 6;
FIG. 10B is an enlarged view of a portion of the cutting edge of the cutting insert shown in FIG. 10A; and
FIG. 11 is an enlarged view showing a difference between the position of the cutting edge of the upper surface and the position of the cutting edge of the lower surface of the cutting insert.

### Detailed Description

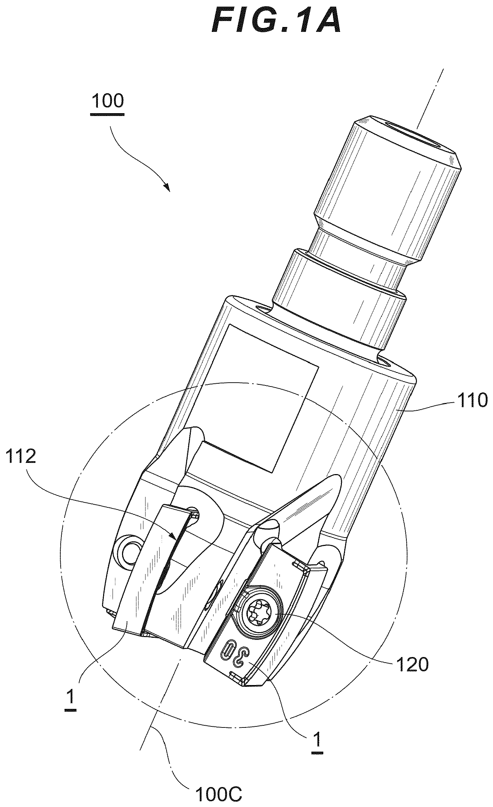

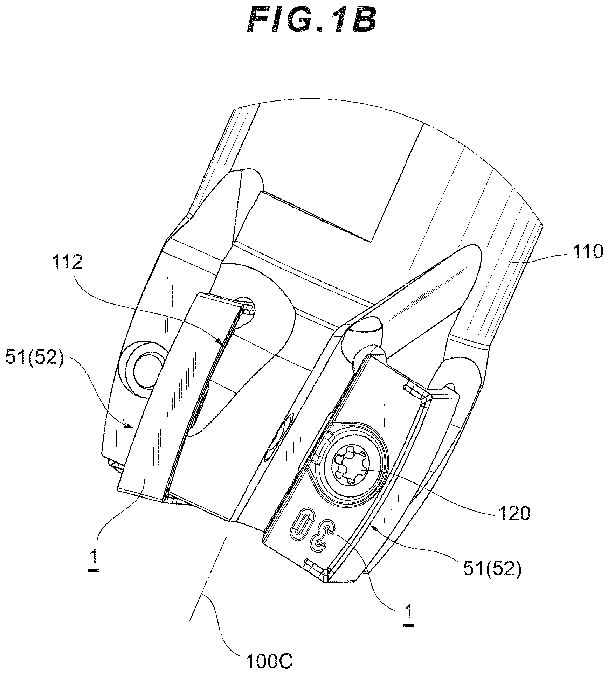

Hereinafter, a preferred embodiment of a cutting insert according to the present invention will be described in detail with reference to the drawings. In the following, first, an overview of a cutting insert 1 that is used to cut a workpiece (not shown) will be described, and thereafter a characteristic portion of the cutting insert 1 according to the present invention will be described (see FIG. 1A and so on).

### Overview of Indexable Rotary Cutting Tool

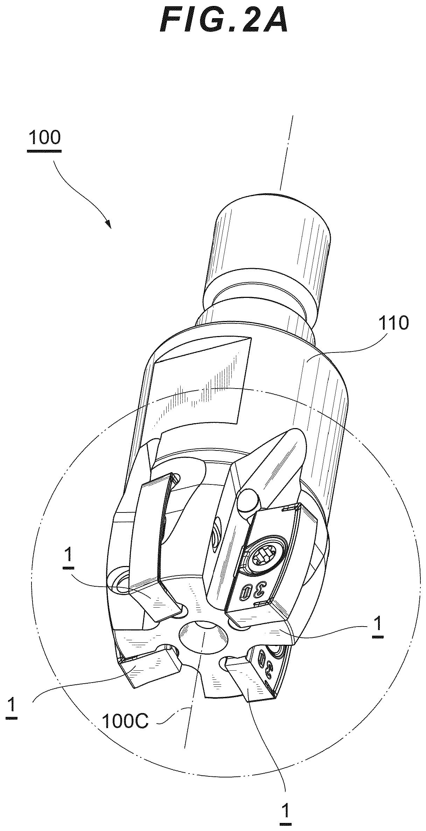

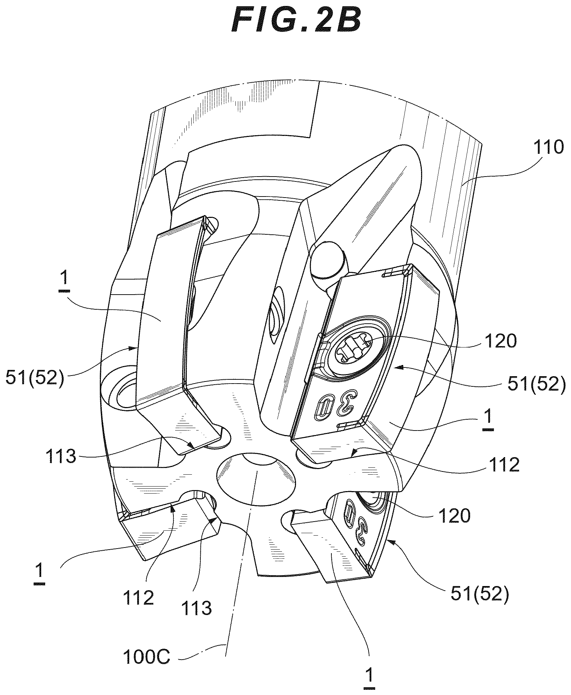

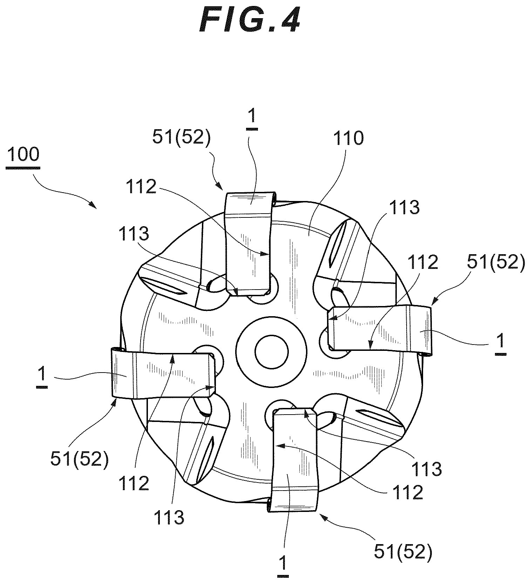

An indexable rotary cutting tool 100 is a tool that is used when five-axis machining is to be performed on a work material (a workpiece) or the like such as a part, a die, or the like with a particularly complicated shape, in order to realize high-efficiency machining and ensure a good machined surface in the finishing process. In the present embodiment, an indexable rotary cutting tool 100 to/from which a cutting insert 1 with curved cutting edges 51 and 52 is attachable/detachable is used (see FIGS. 1A to 4). Such an indexable rotary cutting tool 100 rotates about a tool rotation axis 100C with the cutting insert 1 attached to a seating surface 112 provided at a leading end of a body 110, to cut a workpiece (see FIG. 4 and so on).

### Overview of Cutting Insert

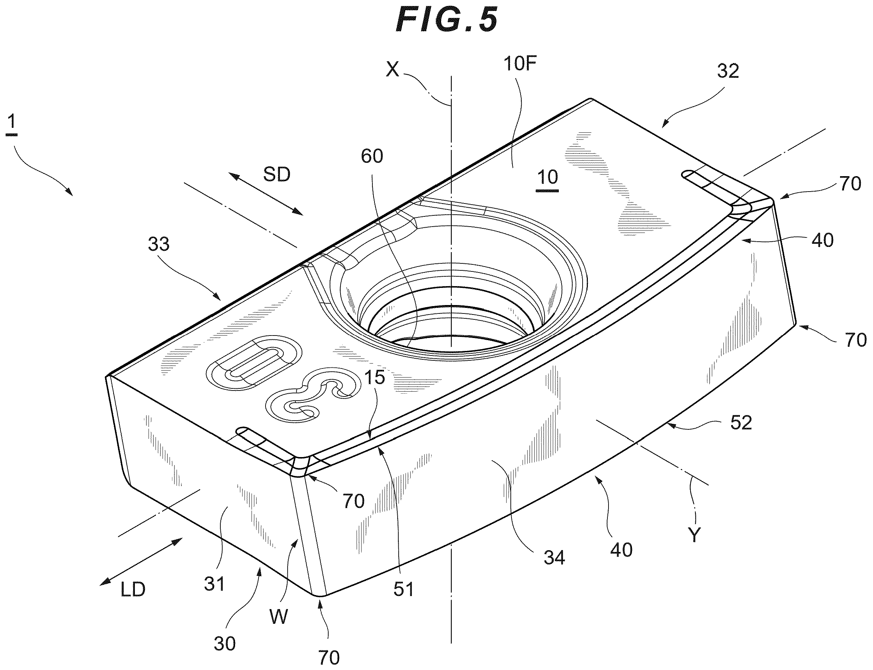

The cutting insert 1 according to the present embodiment has an upper surface 10 that is a first end surface facing upward in FIG. 5 along a central axis X, a lower surface 20 that is a second end surface facing downward opposite to the upper surface 10, a peripheral side surface 30 that is formed to connect the upper surface 10 and the lower surface 20 with each other, the cutting edges 51 and 52, a through hole 60 for a screw that penetrates through the cutting insert 1 from the upper surface 10 to the lower surface 20, corner portions (curved portions) 70, and so on (see FIG. 5 and so on).

The upper surface 10 and the lower surface 20 are substantially rectangular surfaces that each have a long side extending in a lengthwise direction (indicated by the reference sign LD in the drawings) and a short side extending in a widthwise direction (indicated by the reference sign SD in the drawings). The lower surface 20 includes a flat portion 20F that serves as an attachment surface or a binding surface that is in contact with the seating surface 112 of the body 110 when the cutting insert 1 is attached to the indexable rotary cutting tool 100. The upper surface 10 includes a flat portion 10F that serves as an attachment surface or a binding surface that is in contact with the seating surface of the body 110 when the cutting insert 1 is inverted and attached to the indexable rotary cutting tool 100.

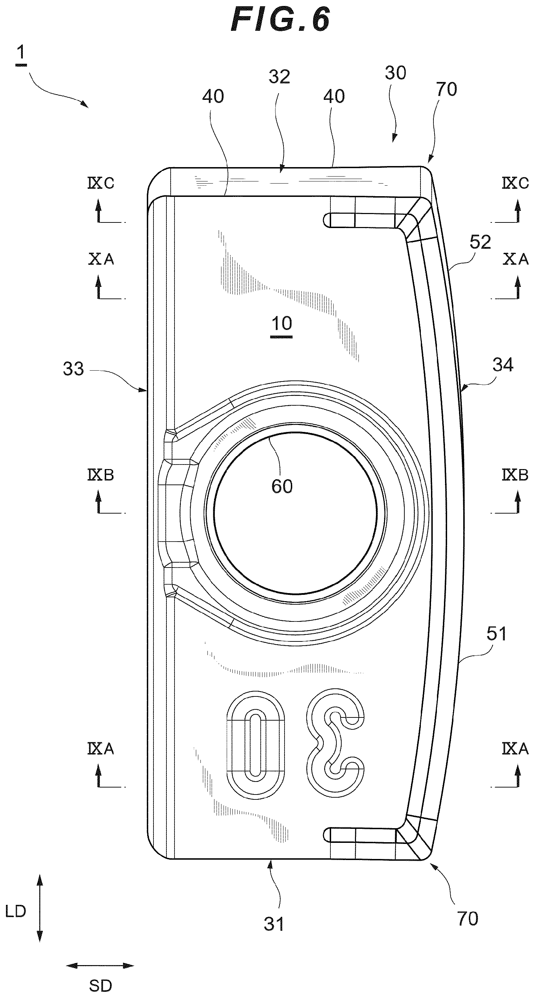

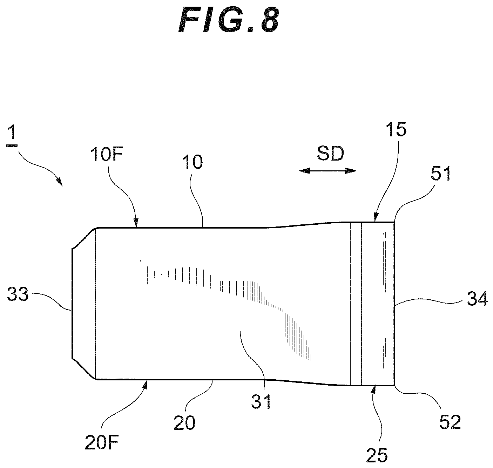

The cutting edge 51 is formed on the intersecting ridge line of the upper surface 10 and the peripheral side surface 30, and the cutting edge 52 is formed on the intersecting ridge line of the lower surface 20 and the peripheral side surface 30 so that the ridge lines extending in the lengthwise direction are curved (see FIGS. 5 and 8, and so on). In the present embodiment, the cutting edges 51 and 52 are each formed in an arc shape (see FIG. 6 and so on). Note that corner portions 70 are not included in the cutting edges 51 and 52 formed in a curved or arc shape in such a way, and the cutting edges 51 and 52 and the corner portions 70 are distinguished from each other.

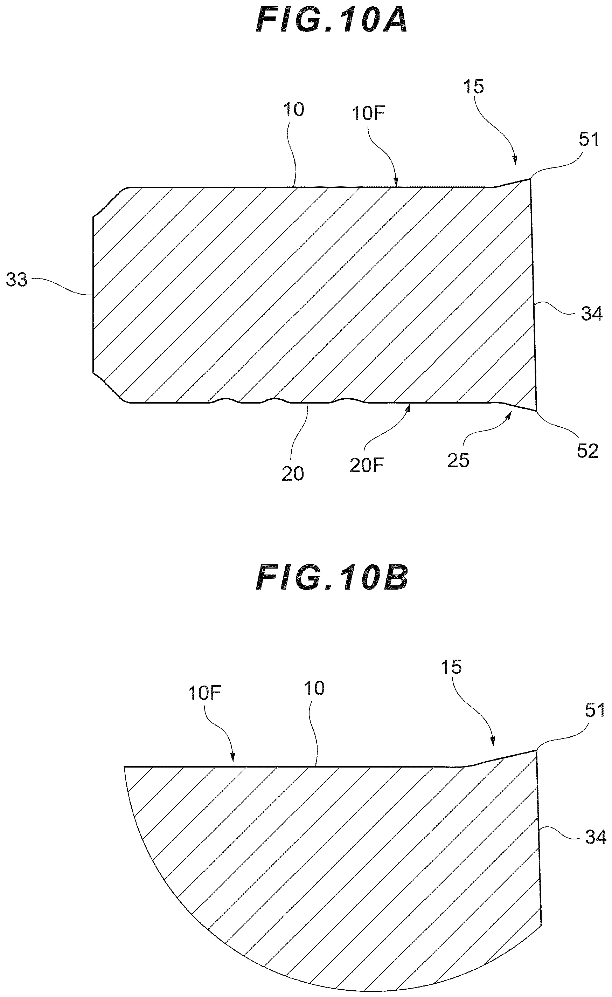

Portions of the upper surface 10 and the lower surface 20 that are continuous with the above-described cutting edges 51 and 52 are provided with rake portions 15 and 25 (see FIG. 10A and so on). In the cutting insert 1 according to the present embodiment, the rake portion 15 of the upper surface 10 is formed so that the height thereof in a direction along the axis that is orthogonal to the lengthwise direction LD and the widthwise direction SD (i.e., the central axis X) slightly decreases in a direction toward the cutting edge 51, and thereafter gradually increases in the direction toward the cutting edge 51, and, in the vicinity of the cutting edge 51, the rake portion 15 is higher than a flat portion 10F around the screw hole of the upper surface 10 (in other words, a flat portion 10F that serves as an attachment surface or a binding surface that is to be in contact with the seating surface of the body 110) (see FIG. 10B). The rake portion 25 of the lower surface 20 is formed so as to have the same configuration (see FIG. 10A and so on). By forming the portions of the upper surface 10 and the lower surface 20 continuous with the cutting edges 51 and 52 into such a shape, it is possible to increase the rake angle of the cutting insert 1 in the positive direction, and therefore the cutting resistance is reduced and the sharpness is improved.

The corner portions 70 are formed between the cutting edges 51 and 52 and intersection regions located in the lengthwise direction LD of the upper surface 10 or the lower surface 20 (in other words, ridge portions between the upper surface 10 or the lower surface 20 and the end surfaces 31 and 32) so as to connect them with each other (see FIG. 5 and so on). These corner portions 70 have a rounded shape (arc shape) when viewed in a direction that is orthogonal to the upper surface 10 or the lower surface 20 (see FIG. 6 and so on). The radius of curvature of the corner portions 70 in the rounded shape is smaller than the radius of curvature of the cutting edges 51 and 52.

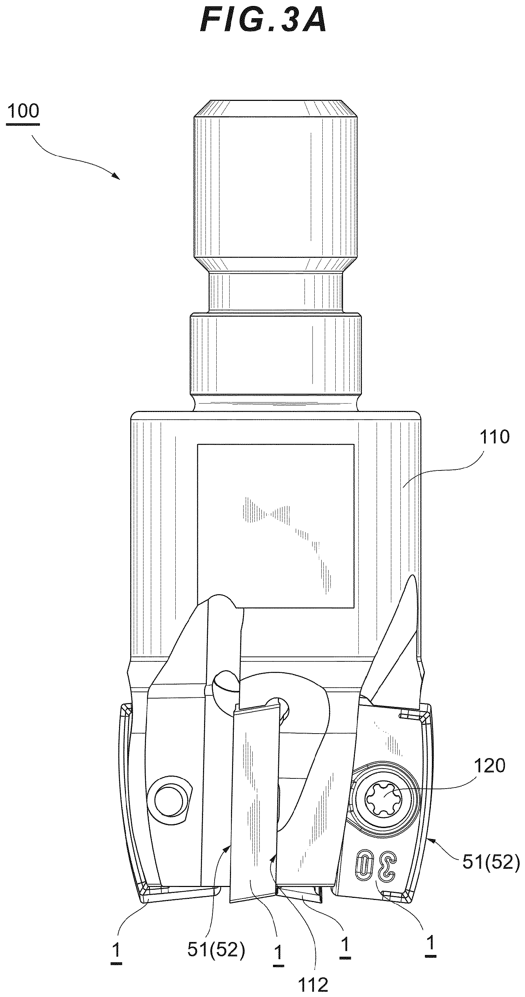

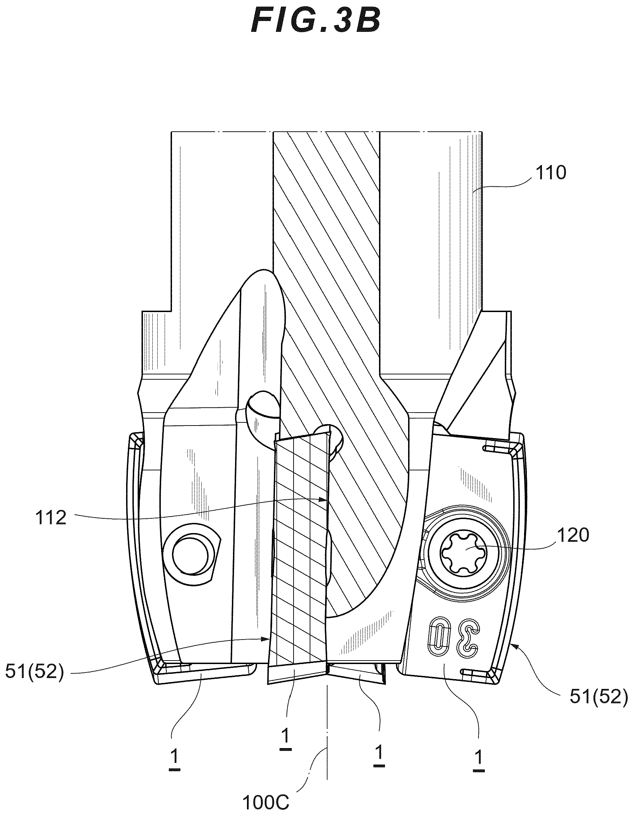

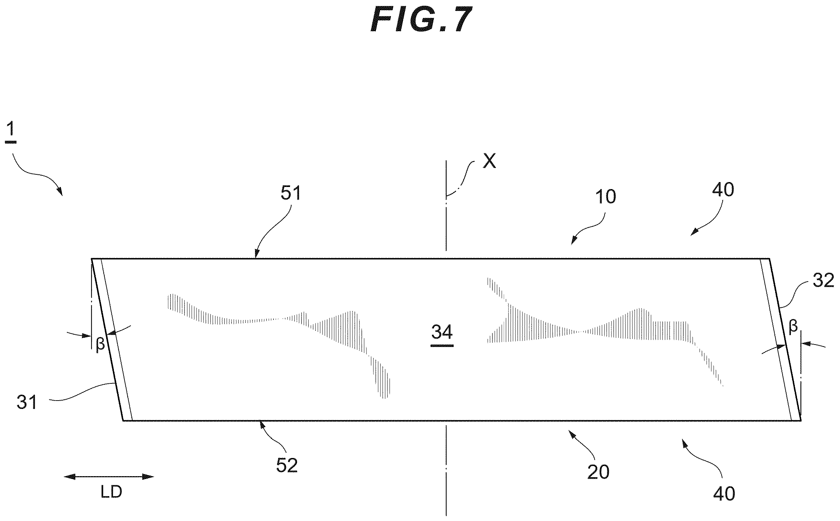

The two end surfaces in the aforementioned lengthwise direction LD of the peripheral side surface 30 (in other words, the two side surfaces that are continuous with the short sides of the upper surface 10 and the lower surface 20, where one end surface is indicated by the reference sign 31 and the other end surface is indicated by the reference sign 32) are inclined with respect to the upper surface or the lower surface, and are parallel to each other (see FIG. 5 and so on), and when the cutting insert 1 is viewed in the widthwise direction SD, the cutting insert 1 has a substantially oblique (diamond) shape (see FIG. 7). In the cutting insert 1 according to the present embodiment, these two end faces 31 and 32 are inclined at a negative angle β with respect to the upper surface 10 or the lower surface 20. The negative angle β mentioned here means, for example, an angle with which the angle of the end surface located on the base end side (which is the opposite side to the leading end and is the upper side in FIG. 3B and so on) of the indexable rotary cutting tool 100 (in this example, the angle between the end surface 32 that faces toward the base end side and the lower surface 20) is an acute angle when the cutting insert 1 is attached to the indexable rotary cutting tool 100 with a screw 120 such that the lower surface 20 faces toward the seating surface 112 (see FIGS. 3B and 7, and so on). This inclination angle β is, for example, 11 degrees. Generally, a cutting insert whose upper surface 10 and lower surface 20 are substantially rectangular is likely to move with respect to the body 110 due to the cutting resistance generated during machining. However, in this embodiment, the two end faces 31 and 32 are provided with inclinations as described above so as to realize a dovetail structure that strengthens the binding with the body 110 on the base end side of the indexable rotary cutting tool 100, in combination with the effect of the wedge shape, and prevents the insert from being lifted. As a result, the cutting insert 1 is less likely to move during machining, which realizes machining with a higher degree of precision. Also, the inclined end surface 31 (32) creates a positive clearance angle on the leading end side of the indexable rotary cutting tool 100.

The surface of the peripheral side surfaces 30 on the opposite side to the cutting edges 51 and 52 is configured as a reference surface 33 constituted by a flat surface that is perpendicular to the upper surface 10 and the lower surface 20 (see FIGS. 8 and 10A, and so on). The cutting insert 1 according to the present embodiment in which the reference surface 33 is orthogonal to the upper surface 10 and the lower surface 20 that serve as binding surfaces is less likely to be displaced when attached to the body 110. More specifically, for example, even if there is a difference in the attachment height of the cutting insert 1 due to the shape of the upper surface 10 or the lower surface 20 or a manufacturing error that may occur in the smooth surface, if the reference surface 33 is orthogonal, the positions of the cutting edges 51 and 52 (the distances from the binding surface 113 of the body 110, which is in contact with the reference surface 33, to the cutting edges 51 and 52) are always invariable despite the difference in the attachment height, and it is expected that the displacement is as small as possible (see FIG. 4 and so on). From this reason, for example, when the cutting insert 1 is inverted and reattached to the body 110 and the cutting edges 51 and 52 are replaced with each other, the difference in the distance from the cutting edges 51 and 52 to the side surface (the binding surface) is smaller, which makes it possible to perform more precise machining. Although the reference surface 33 that is constituted by a flat surface is described herein, such a reference surface 33 is merely a preferable example. As long as the surface can function as a reference surface as described above, there is no problem even if a groove is formed in a portion of the reference surface 33 and the reference surface 33 is not entirely flat, for example.

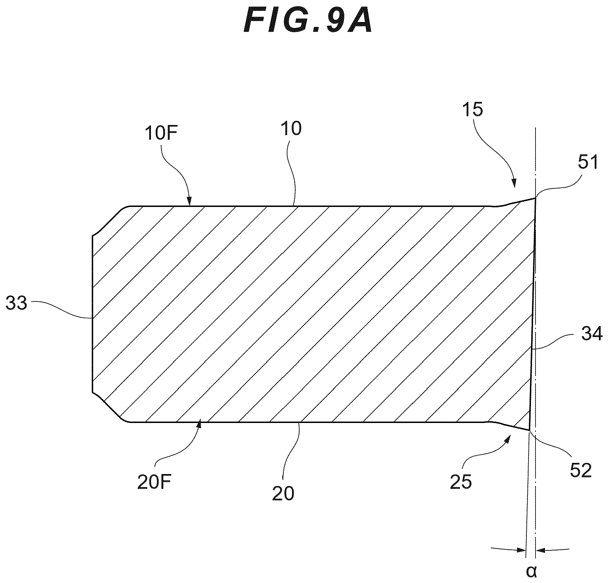

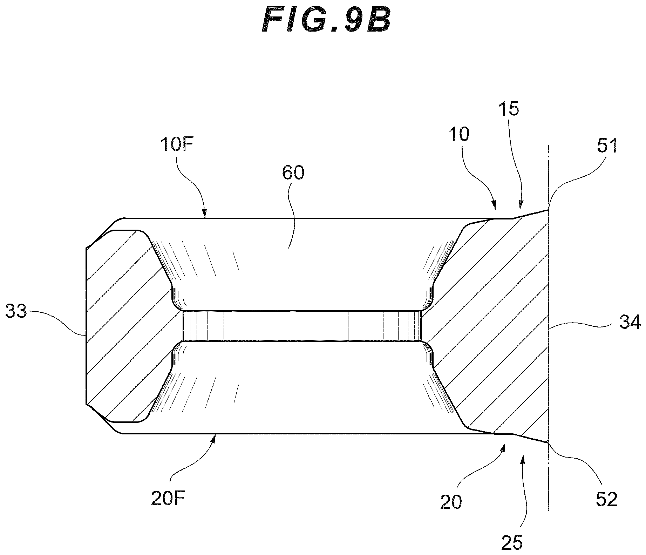

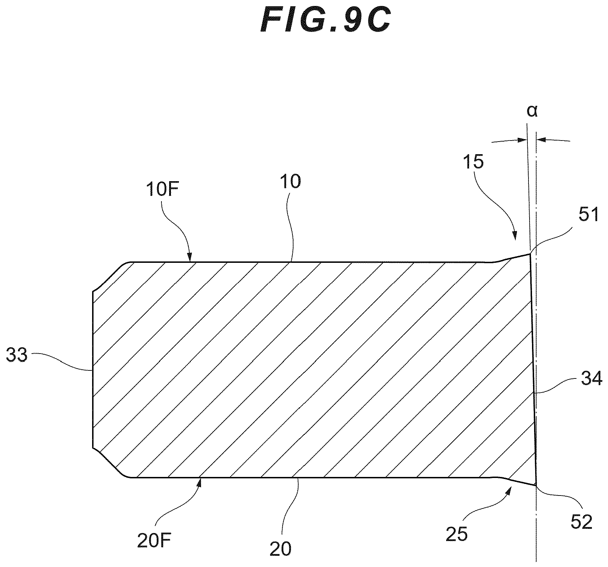

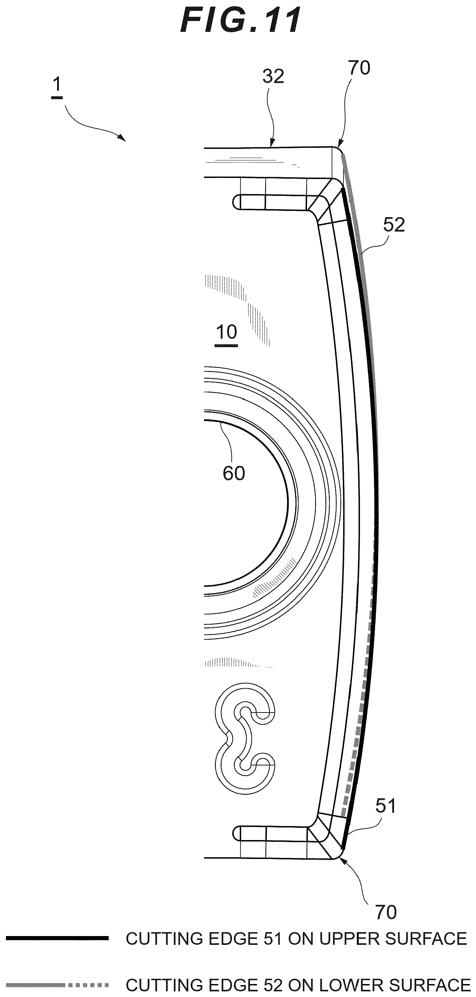

The portion of the peripheral side surface 30 continuous with the region between the cutting edge 51 on the upper surface 10 side and the cutting edge 52 on the lower surface 20 side functions as a flank (indicated by the reference sign 34) for the cutting edges 51 and 52 (see FIG. 5 and so on). The flank 34 of the cutting insert 1 according to the present embodiment is formed so that the clearance angle α thereof gradually changes in the lengthwise direction LD (see FIGS. 6 and 9A to 9C). That is to say, the cutting insert 1 according to the present embodiment is configured so that the upper surface 10 and the lower surface 20 have an axisymmetric shape centered around a central axis of symmetry (indicated by the reference sign Y) that is orthogonal to the reference surface 33 and passes through the center of the reference surface 33, and the cutting edge 51 on the upper surface 10 side and the cutting edge 52 on the lower surface 20 side can be interchanged by reversing the cutting insert 1 by 180 ° about the center axis Y of symmetry. In addition, the upper surface 10 and the lower surface 20 are offset from each other in the lengthwise direction LD at the same angle as the inclination angle β of the end surfaces 31 and 32 (FIGS. 7 and 11). The flank 34 constituted by a surface connecting the upper surface 10 and the lower surface 20 that are in such a positional relationship has a shape in which the clearance angle α gradually changes from a positive angle to a negative angle in the lengthwise direction LD (see FIGS. 9A to 9C). In addition, the clearance angle α of the flank 34 is zero at an intermediate position in the lengthwise direction LD (see FIG. 9B). Such a flank 34 of the cutting insert 1 according to the present embodiment may be, for example, a surface that is formed by the locus through which the arc-shaped cutting edge 51 passes when the arc-shaped cutting edge 51 of the upper surface 10 is translated to (the position of) the arc-shaped cutting edge 52 of the lower surface 20. In other words, the flank 34 may be constituted by a curved surface obtained by extending the curve of the arc-shaped cutting edge 51 of the upper surface 10 toward the arc-shaped cutting edge 52 of the lower surface 20.

As described so far, the above cutting insert 1 according to the present embodiment has a structure that has the cutting edges 51 and 52 respectively on the upper surface 10 and the lower surface 20. Therefore, it is possible to provide a plurality of blades without the need to increase the insert width (i.e., in light of the above embodiment, the length in the widthwise direction SD, which is, in other words, the distance between the cutting edges 51 and 52 and the reference surface 33). In this way, by reducing the insert width while providing a sufficient number of blades, it is possible to increase the number of inserts mounted on the body 110 of the indexable rotary cutting tool 100 and increase the number of cutting edges of the tool.

Also, as described above, despite being of a two-corner type, the cutting insert 1 according to the present embodiment has a flat surface on the opposite side to the cutting edges 51 and 52 in the widthwise direction SD, and this flat surface effectively functions as the reference surface 33 when the insert is manufactured as well as when the cutting insert 1 is attached to the cutter body. Therefore, it is possible to realize unprecedented high-precision machining.

In addition, the cutting insert 1 according to the present embodiment described above and the indexable rotary cutting tool 100 to which the cutting insert 1 can be attached can solve the following problems of the conventional structure.
- It is possible to solve the problem of the conventional structure in that the reference surface is inclined, the cutting edge have only one corner, and therefore accuracy and economy are poor. In other words, if the side surface on the opposite side to the cutting edge is a flat surface and is inclined at a positive angle, it is not easy to use the surface as a "reference surface" for accurately attaching the curved cutting edge (and the flank). Also, if the inclined surface is used as a reference surface, machining accuracy tends to be low. Also, only one cutting edge can be used, and therefore economic efficiency may be low.
- It is possible to solve the problem of the conventional structure in that it is impossible to mount many inserts on the body due to the square shape thereof despite the reference surface being inclined and the cutting edge having four corners, and economy (machining efficiency) is poor. For example, in a four-corner type positive insert with an arc-shaped cutting edge, the side surface opposite to the cutting edge is not a flat surface. In addition, such an insert does not have a widthwise direction and has a square shape, and therefore the width of the insert is large, and it cannot be applied to an end mill with a small diameter.

Although the above-described embodiment is an example of a preferred embodiment of the present invention, the present invention is not limited to such an embodiment, and various modifications can be made without departing from the scope of the appended claims.

The present invention is desirably applicable to a cutting insert and an indexable rotary cutting tool.

## Claims

1. A cutting insert (1) comprising:
an upper surface (10) that has a shape with a lengthwise direction (LD) and a widthwise direction (SD);
a lower surface (20) that is located opposite to the upper surface (10) and has a shape with a lengthwise direction (LD) and a widthwise direction (SD);
a peripheral side surface (30) that is formed so as to connect the upper surface (10) and the lower surface (20);
cutting edges (51, 52) that are respectively formed on an intersecting ridge line of the upper surface (10) and the peripheral side surface (30), and on an intersecting ridge line of the lower surface (20) and the peripheral side surface (30), and each have a curved ridge line that extends in a lengthwise direction (LD) thereof; and
a through hole (60) that penetrates from the upper surface (10) to the lower surface (20),
wherein end surfaces (31, 32) located in the lengthwise direction (LD) of the upper surface (10) and the lower surface (20), of the peripheral surface (30), are respectively inclined with respect to the upper surface (10) and the lower surface (20), and are parallel to each other, and
a reference surface (33) that is located opposite to the cutting edges (51, 52), of the peripheral surface (30), is a flat surface that is orthogonal to the upper surface (10) and the lower surface (20), **characterized in that**
flanks (34) of the cutting edges (51, 52) have a shape in which a clearance angle (α) thereof gradually changes from a positive angle to a negative angle in the lengthwise direction (LD).

2. The cutting insert (1) according to claim 1,
wherein the curved cutting edges (51, 52), and intersection regions that are respectively located in the lengthwise direction (LD) of the upper surface (10) and the lower surface (20), are connected to each other via curved portions (70) when viewed in a direction that is orthogonal to the upper surface (10) and a direction orthogonal to the lower surface (20), respectively.

3. The cutting insert (10) according to claim 2,
wherein each of the curved portions (70) has an arc shape.

4. The cutting insert (1) according to claim 2 or 3,
wherein a radius of curvature of the curved portions (70) is smaller than a radius of curvature of the cutting edges (51, 52).

5. The cutting insert (1) according to any one of claims 1 to 4,
wherein the upper surface (10) and the lower surface (20) have an axially symmetric shape centered around a central axis of symmetry (Y) that is orthogonal to the reference surface (33), and are offset from each other in the lengthwise direction (LD) at the same angle as an inclination angle (β) of the end surfaces (31, 32).

6. The cutting insert (1) according to any one of claims 1 to 5,
wherein the upper surface (10) is formed so as to have a shape in which a height of the upper surface (10) in an axial direction that is orthogonal to the lengthwise direction (LD) and the widthwise direction (SD) decreases in a direction toward the cutting edge (51), and thereafter gradually increases in the direction toward the cutting edge (51).

7. The cutting insert (1) according to any one of claims 1 to 6,
wherein a height of the cutting edge (51) in the axial direction is larger than a height of a flat portion (10F) around the through hole (60), of the upper surface (10).

8. A body (110) of a cutting tool (100)**,** wherein the cutting insert (1) according to one of claims 1 to 7 is detachably attached to the body (110), the body (110) comprising:
a seating surface (112) on which a flat portion (10F, 20F) around the through hole (60) of the upper surface (10) or the lower surface (20) of the cutting insert (1) is to be seated as an attachment surface; and
a binding surface (113) that is orthogonal to the seating surface (112) and is to abut against the reference surface (33) of the cutting insert (1).

9. An indexable rotary cutting tool (100) comprising the body (110) according to claim 8 and the cutting insert according to one of claims 1 to 7.

## Patentansprüche

1. Schneideinsatz (1), aufweisend:
eine obere Fläche (10), die eine Form mit einer Längsrichtung (LD) und einer Breitenrichtung (SD) aufweist;
eine untere Fläche (20), die der oberen Fläche (10) gegenüberliegt und eine Form mit einer Längsrichtung (LD) und einer Breitenrichtung (SD) aufweist;
eine Umfangsseitenfläche (30), die so ausgebildet ist, dass sie die obere Fläche (10) und die untere Fläche (20) verbindet;
Schneidkanten (51, 52), die jeweils an einer Schnittkantenlinie der oberen Fläche (10) und der Umfangsseitenfläche (30) beziehungsweise an einer Schnittkantenlinie der unteren Fläche (20) und der Umfangsseitenfläche (30) ausgebildet sind und jeweils eine gekrümmte Kantenlinie aufweisen, die sich in einer Längsrichtung (LD) derselben erstreckt; und
ein Durchgangsloch (60), das von der oberen Fläche (10) bis zur unteren Fläche (20) hindurchgeht,
wobei Stirnflächen (31, 32) der Umfangsseitenfläche (30), die in der Längsrichtung (LD) der oberen Fläche (10) und der unteren Fläche (20) liegen, jeweils in Bezug auf die obere Fläche (10) beziehungsweise die untere Fläche (20) geneigt sind und parallel zueinander sind, und
eine den Schneidkanten (51, 52) gegenüberliegende Referenzfläche (33) der Umfangsseitenfläche (30) eine ebene Fläche ist, die orthogonal zur oberen Fläche (10) und zur unteren Fläche (20) ist,
**dadurch gekennzeichnet, dass**
Freiflächen (34) der Schneidkanten (51, 52) eine Form aufweisen, bei der sich ein Freiwinkel (α) derselben in der Längsrichtung (LD) allmählich von einem positiven Winkel zu einem negativen Winkel ändert.

2. Schneideinsatz (1) nach Anspruch 1,
wobei die gekrümmten Schneidkanten (51, 52) und Schnittbereiche, die jeweils in der Längsrichtung (LD) der oberen Fläche (10) und der unteren Fläche (20) liegen, bei Betrachtung in einer Richtung, die orthogonal zur oberen Fläche (10) ist, beziehungsweise in einer Richtung, die orthogonal zur unteren Fläche (20) ist, über gekrümmte Abschnitte (70) miteinander verbunden sind.

3. Schneideinsatz (10) nach Anspruch 2,
wobei jeder der gekrümmten Abschnitte (70) eine Bogenform aufweist.

4. Schneideinsatz (1) nach Anspruch 2 oder 3,
wobei ein Krümmungsradius der gekrümmten Abschnitte (70) kleiner als ein Krümmungsradius der Schneidkanten (51, 52) ist.

5. Schneideinsatz (1) nach einem der Ansprüche 1 bis 4,
wobei die obere Fläche (10) und die untere Fläche (20) eine achsensymmetrische Form aufweisen, die um eine zentrale Symmetrieachse (Y) zentriert ist, welche orthogonal zur Referenzfläche (33) ist, und in der Längsrichtung (LD) unter einem Winkel gegeneinander versetzt sind, der gleich einem Neigungswinkel (β) der Stirnflächen (31, 32) ist.

6. Schneideinsatz (1) nach einem der Ansprüche 1 bis 5,
wobei die obere Fläche (10) so ausgebildet ist, dass sie eine Form aufweist, bei der eine Höhe der oberen Fläche (10) in einer axialen Richtung, die orthogonal zur Längsrichtung (LD) und zur Breitenrichtung (SD) ist, in einer Richtung zur Schneidkante (51) hin abnimmt und danach in der Richtung zur Schneidkante (51) hin allmählich zunimmt.

7. Schneideinsatz (1) nach einem der Ansprüche 1 bis 6,
wobei eine Höhe der Schneidkante (51) in der axialen Richtung größer als eine Höhe eines um das Durchgangsloch (60) herumliegenden ebenen Abschnitts (10F) der oberen Fläche (10) ist.

8. Körper (110) eines Schneidwerkzeugs (100), wobei der Schneideinsatz (1) nach einem der Ansprüche 1 bis 7 lösbar an dem Körper (110) befestigt ist, wobei der Körper (110) aufweist:
eine Sitzfläche (112), auf der ein um das Durchgangsloch (60) herumliegender ebener Abschnitt (10F, 20F) der oberen Fläche (10) oder der unteren Fläche (20) des Schneideinsatzes (1) als Befestigungsfläche aufliegen soll; und
eine Anlagefläche (113), die orthogonal zur Sitzfläche (112) ist und an der Referenzfläche (33) des Schneideinsatzes (1) anliegen soll.

9. Indexierbares rotierendes Schneidwerkzeug (100), aufweisend den Körper (110) nach Anspruch 8 und den Schneideinsatz nach einem der Ansprüche 1 bis 7.

## Revendications

1. Plaquette de coupe (1) comprenant :
une surface supérieure (10) qui présente une forme avec une direction longitudinale (LD) et une direction de largeur (SD) ;
une surface inférieure (20) qui est située à l'opposé de la surface supérieure (10) et présente une forme avec une direction longitudinale (LD) et une direction de largeur (SD) ;
une surface latérale périphérique (30) qui est formée de manière à relier la surface supérieure (10) et la surface inférieure (20) ;
des arêtes de coupe (51, 52) qui sont respectivement formées sur une ligne d'arête d'intersection de la surface supérieure (10) et de la surface latérale périphérique (30), et sur une ligne d'arête d'intersection de la surface inférieure (20) et de la surface latérale périphérique (30), et présentent chacune une ligne d'arête incurvée qui s'étend dans une direction longitudinale (LD) de celles-ci ; et
un trou traversant (60) qui s'étend de la surface supérieure (10) à la surface inférieure (20),
dans laquelle des surfaces d'extrémité (31, 32) de la surface latérale périphérique (30), situées dans la direction longitudinale (LD) de la surface supérieure (10) et de la surface inférieure (20), sont respectivement inclinées par rapport à la surface supérieure (10) et à la surface inférieure (20), et sont parallèles l'une à l'autre, et
une surface de référence (33) de la surface latérale périphérique (30), qui est située à l'opposé des arêtes de coupe (51, 52), est une surface plane qui est orthogonale à la surface supérieure (10) et à la surface inférieure (20),
**caractérisée en ce que**
des faces de dépouille (34) des arêtes de coupe (51, 52) présentent une forme dans laquelle un angle de dépouille (α) de celles-ci passe progressivement d'un angle positif à un angle négatif dans la direction longitudinale (LD).

2. Plaquette de coupe (1) selon la revendication 1,
dans laquelle les arêtes de coupe incurvées (51, 52) et des régions d'intersection qui sont respectivement situées dans la direction longitudinale (LD) de la surface supérieure (10) et de la surface inférieure (20) sont reliées entre elles par l'intermédiaire de portions incurvées (70), lorsqu'elles sont vues respectivement dans une direction qui est orthogonale à la surface supérieure (10) et dans une direction orthogonale à la surface inférieure (20).

3. Plaquette de coupe (10) selon la revendication 2,
dans laquelle chacune des portions incurvées (70) présente une forme d'arc.

4. Plaquette de coupe (1) selon la revendication 2 ou 3,
dans laquelle un rayon de courbure des portions incurvées (70) est inférieur à un rayon de courbure des arêtes de coupe (51, 52).

5. Plaquette de coupe (1) selon l'une quelconque des revendications 1 à 4,
dans laquelle la surface supérieure (10) et la surface inférieure (20) présentent une forme à symétrie axiale centrée autour d'un axe central de symétrie (Y) qui est orthogonal à la surface de référence (33), et sont décalées l'une par rapport à l'autre dans la direction longitudinale (LD) suivant un angle égal à un angle d'inclinaison (β) des surfaces d'extrémité (31, 32).

6. Plaquette de coupe (1) selon l'une quelconque des revendications 1 à 5,
dans laquelle la surface supérieure (10) est formée de manière à présenter une forme dans laquelle une hauteur de la surface supérieure (10) dans une direction axiale qui est orthogonale à la direction longitudinale (LD) et à la direction de largeur (SD) diminue dans une direction allant vers l'arête de coupe (51), et augmente ensuite progressivement dans la direction allant vers l'arête de coupe (51).

7. Plaquette de coupe (1) selon l'une quelconque des revendications 1 à 6,
dans laquelle une hauteur de l'arête de coupe (51) dans la direction axiale est supérieure à une hauteur d'une portion plane (10F) de la surface supérieure (10), située autour du trou traversant (60).

8. Corps (110) d'un outil de coupe (100), dans lequel la plaquette de coupe (1) selon l'une des revendications 1 à 7 est fixée de manière amovible au corps (110), le corps (110) comprenant :
une surface d'assise (112) sur laquelle une portion plane (10F, 20F), située autour du trou traversant (60) et faisant partie de la surface supérieure (10) ou de la surface inférieure (20) de la plaquette de coupe (1), doit reposer en tant que surface de fixation ; et
une surface d'appui (113) qui est orthogonale à la surface d'assise (112) et doit venir en appui contre la surface de référence (33) de la plaquette de coupe (1).

9. Outil de coupe rotatif indexable (100) comprenant le corps (110) selon la revendication 8 et la plaquette de coupe selon l'une des revendications 1 à 7.
